# EUROPEAN PATENT APPLICATION

(11) **EP 2 138 229 A2**
(43) Date of publication of application: **30.12.2009**
(21) Application number: 09155564.9
(22) Date of filing: 19.03.2009
(51) Int. Cl.: B01J 20/26, B01J 20/30, C08F 212/08, C08F 212/34, C08F 8/00

(54) **Friedel-Crafts Post-Crosslinked Adsorbent and Method of Preparation**

(30) Priority: 26.06.2008 CN 200810125084
(71) Applicant: Rohm and Haas Company, Philadelphia, PA 19106-2399 (US)
(72) Inventor: XU, Mancai, 410081, Changsha City Hunan (CN); ZHANG, Zheng, 200136, Shanghai (CN)
(74) Representative: Kent, Venetia Katherine

(57) **Abstract**

A post-crosslinked adsorbent comprises: monomer units of (a) at least 47wt% at least one polyvinylaromatic monomer and (b) up to 53wt% at least one monovinylaromatic monomer; and 0-0.2 mmol/g pendent vinyl groups; wherein the dry adsorbent has BET specific surface area in the range of about 700-1500 m2/g, BET average pore diameter 6.0-11.8 nm, BET porosity 1.2-3.5 mL/g, BJH adsorption micropore volume less than 20% of total BJH adsorption pore volume, and HK micropore volume less than 24% of total BJH adsorption pore volume. The invention is also directed to a preparation method for the polymeric adsorbent.

## Description

The present invention relates generally to a post cross-linked adsorbent and method for preparing a post-crosslinked adsorbent resin with high porosity and high surface area by copolymerizing polyvinylaromatic monomers and monovinylaromatic monomers followed by the Friedel-Crafts reaction post-crosslinking of pendant vinyl groups of the copolymer in a single reaction vessel without removal of porogen.

Porous highly crosslinked aromatic copolymers are widely used as adsorbents for separation and purification of organic compounds. The adsorption capacity of polymeric adsorbents generally increase with the increasing of surface area and porosity. One method to increase the surface area and porosity of porous highly crosslinked aromatic copolymers is to react residual vinyl groups in the copolymer in the presence of a Lewis-acid catalyst at elevated temperature after removal of porogen from the copolymer and thermally drying, as described in U.S. Pat. No. 4,543,365, 5,218,004, 5,885,638, 6,147,127, 6,235,802, 6,541,527, A. K. Nyhus, et al., Journal of Polymer Science, Part A: Polymer Chemistry, John Wiley & Sons, Inc., Vol.38, 1366-1378(2000), C. Zhou et al., Journal of Applied Polymer Science, John Wiley & Sons, Inc., Vol.83, 1668-1677(2002), and K. Aleksieva, et al., Polymer, Elsevier Science Publishers, Vol.47, 6544-6550(2006). The post-crosslinked copolymer has higher porosity, higher surface area as compared with the initial copolymer, and thus shows improved adsorption capacity, especially of small molecules, with the increasing of surface area. However, distilling removal of the porogen and drying of the initial copolymer result in an increased micropore content which may exceed as much as 30% of total pore volume. When this high micropore content adsorbent is used in the recovery of organic compounds, the adsorbed compounds are often difficult to be desorbed quickly and thoroughly despite of the high adsorption capacity.

The problems addressed by the present invention are to overcome the deficiencies of prior adsorbents, such as slow desorbing rate resulting from the abundance of micropore in the adsorbents, and to improve both the adsorption and desorption performance of the post-crosslinked adsorbent. Accordingly, the present invention provides a method of producing a highly crosslinked aromatic copolymer in the presence of the Friedel-Crafts catalyst without removal of porogen so as to reduce the micropore content in the post-crosslinked adsorbent.

The present invention is directed to a post-crosslinked adsorbent comprising:
monomer units of (a) at least 47wt% at least one polyvinylaromatic monomer and (b) up to 53wt% at least one monovinylaromatic monomer; and
0-0.2 mmol/g pendent vinyl groups;
wherein the dry adsorbent has BET specific surface area in the range of about 700-1500 m²/g, BET average pore diameter 6.0-11.8 nm, BET porosity 1.2-3.5 mL/g, BJH adsorption micropore volume less than 20% of total BJH adsorption pore volume, and HK micropore volume less than 24% of total BJH adsorption pore volume.

The present invention is further directed to a method for preparing a polymeric adsorbent comprising the steps of:
(i) suspension copolymerizing monomers comprising at least one polyvinylaromatic monomer and at least one monovinylaromatic monomer in the presence of copolymerization porogen;
(ii) post-crosslinking the copolymer with the post-crosslink porogen as cosolvent in the presence of Friedel-Crafts catalyst; and
(iii) isolating the post-crosslinked adsorbent.

The present invention overcomes the disadvantages of the polymeric adsorbents of the state of art by providing, as the core of the present invention, a method for producing a high porosity and high specific surface area resin which adsorbs organic compounds with high capacity. The adsorbent with high porosity and low micropore content enables the adsorbed compounds be easily desorbed from the resin.

As used in the present invention, "BET" means Brunauer-Emmett-Teller theory, which is an adsorption model based on multilayer adsorption. BET average pore diameter is calculated with the equation of D = 4V/A. (D-average pore diameter; V-pore volume; A-specific surface area)

As used herein, "BJH" means Barret-Joyner-Halenda scheme for calculation of pore size distribution from nitrogen adsorption data.

As used herein, "HK" means Horvath-Kawazoe method for evaluation of micropore size distribution from low pressure adsorption isotherms.

The monomers employed in suspension copolymerization comprise at least one polyvinylaromatic monomer. The polyvinylaromatic monomers include the group consisting of divinylbenzene, such as meta-divinylbenzene and para-divinylbenzene, trivinylbenzene, divinyltoluene, divinylxylene, divinylnaphthalene, and their derivatives such as halide substituted, for example divinyl chlorobenzen. These compounds may be used alone or as a mixture of two or more thereof. An especially preferred polyvinylaromatic monomer mixture consists of meta- and para-divinylbenzene.

The amount of the polyvinylaromatic monomer used in the first aspect of the invention is at least 47%, in percentage by weight based on the dry weight of the copolymer. Preferred is at least 55%, especially from 63% to 80%.

The term "at least" in a percentage range in the present invention means any and all amounts greater than and including the start point of the range through to 100% but not including 100%.

The monomers employed in suspension copolymerization comprise at least one monovinylaromatic monomer. Examples of the monovinylaromatic monomers include, but are not limited to, styrene and (C₁-C₄)alkyl-substituted styrenes such as ethylvinylbenzene (including meta-ethylvinylbenzene and para-ethylvinylbenzene), vinyltoluene, and their derivatives such as halide substituted, for example vinylbenzyl chloride and ethylvinylbenzyl chloride. These compounds may be used alone or as a mixture of two or more thereof. Preferred is selected from mixtures such as the mixture of meta- and para-ethylvinylbenzene and the mixture of styrene, meta- and para-ethylvinylbenzene.

The amount of the monovinylaromatic monomer used in the first aspect of the invention is up to 53%, in percentage by weight based on the dry weight of the copolymer. Preferred is up to 45%, especially from 20% to 37%.

The term "up to" in a range means any and all amounts greater than zero and through to and including the end point of the range.

In an extreme embodiment the copolymer contains monomer unis of, in percentage by weight based on the dry weight of the copolymer, (a) near 100% the mixture of meta- and para-divinylbenzene and (b) almost 0% the mixture of meta- and para-ethylvinylbenzene.

Optionally, the copolymer may contain up to 10%, preferred up to 5%, by weight based on the dry weight of the copolymer, copolymerized polar vinyl monomers, such as acrylonitrile, methyl methacrylate, and methyl acrylate. This group of monomers does not include any other monomer aftorementioned.

In one embodiment of the present invention the copolymer contains monomers of, in percentage by weight based on the dry weight of the copolymer, from 55% to 80% of at least one polyvinylaromatic monomer selected from meta-divinylbenzene, para-divinylbenzene, and the mixture of meta- and para-divinylbenzene and from 20% to 45% at least one monounsaturated vinylaromatic monomer selected from meta-ethylvinylbenzene; para-ethylvinylbenzene; styrene; the mixture of meta- and para-ethylvinylbenzene; and the mixture of styrene, meta- and para-ethylvinylbenzene.

In another embodiment of the present invention the copolymer contains monomers of, in percentage by weight based on the dry weight of the copolymer, (a) about 55% the mixture of meta- and para-divinylbenzene and (b) about 45% the mixture of meta- and para-ethylvinylbenzene.

Content of pendant vinyl group in the post-crosslinked adsorbent is in the range of 0-0.2 mmol/g, which is much lower than that of the conventional copolymerized porous aromatic polymer before post-crosslinking.

The adsorbent of the first aspect of the invention is preferably prepared by the method comprising the steps of:
(i) suspension copolymerizing monomers comprising at least one polyvinylaromatic monomer and at least one monovinylaromatic monomer in the presence of copolymerization porogen;
(ii) post-crosslinking the copolymer with the post-crosslink porogen as cosolvent in the presence of Friedel-Crafts catalyst; and
(iii) isolating the post-crosslinked adsorbent.

The second aspect of the present invention is further directed to a method for preparing a polymeric adsorbent, comprising the steps of:
(i) suspension copolymerizing monomers comprising at least one polyvinylaromatic monomer and at least one monovinylaromatic monomer in the presence of copolymerization porogen;
(ii) post-crosslinking the copolymer with the post-crosslink porogen as cosolvent in the presence of Friedel-Crafts catalyst; and
(iii) isolating the post-crosslinked adsorbent.

The preparation method of the polymeric adsorbent comprises two processes of copolymerization of the monomers and post-crosslinking of the copolymer with the presence of porogen in both processes. The term "conducted in a single reaction vessel" in present invention is meant that the copolymerization and post-crosslinking reactions are completed neither by removing the porogen after the copolymerization reaction nor, as normally described in the art, by isolating of the initial copolymer before post-crosslinking.

The monomer units employed in the suspension copolymerization of the second aspect of the invention are the same as of the first aspect except for the amount. The method of preparation of the polymeric adsorbent of the invention is suitable for any of technically acceptable monomer units content. Preferably, the monomer units of the second aspect of the invention are at least 47 wt% at least one polyvinylaromatic monomer and up to 53 wt% at least one monovinylaromatic monomer. More preferable are 55-80wt% at least one polyvinylaromatic monomer and 20-45wt% at least one monovinylaromatic monomer.

The porogen which employed in suspension copolymerization is selected from the category of alkyl chlorides, such as methylene dichloride, ethylene dichloride and propylene dichloride; aromatic chlorides such as, for example chlorobenzene and chlorotoluene. The volume ratio of porogen to monomers is from 1:2 to 3:1, preferably from 1:1 to 2:1.

The copolymerization reaction is carried out in accordance with a conventional method, preferably in a continuous aqueous phase solution containing suspension aids (such as dispersants, protective colloids and buffers) followed by mixing with the organic phase solution containing monomers, porogens and initiates. The monomers are copolymerized at elevated temperature, and the copolymer is in bead form.

The copolymer bead obtained in above suspension copolymerization is then post-crosslinked in the presence of the Friedel-Crafts catalyst to prepare a post-crosslinked polymer bead with increased surface area and pore volume, which allows its usage as polymeric adsorbent, ion-exchange resin, solvent impregnated resin or chelate resin.

The Friedel-Crafts catalyst employed in post-crosslinking of the copolymer includes metal halides, such as, for example ferric halides, zinc halides, aluminum halides, tin halides and boron halides, preferably FeCl₃, ZnCl₂, AlCl₃, SnCl₄ and BF₃, especially their anhydrous compound. Suitable amount of the Friedel-Crafts catalyst is from about 5% to about 20% of the dry weight of copolymer.

Suitable porogen employed in the post-crosslinking includes, but not limit to di(ethylene glycol) mono-methyl ether, di(ethylene glycol) mono-ethyl ether, di(ethylene glycol) mono-butyl ether, di(ethylene glycol) dimethyl ether, di(ethylene glycol) diethyl ether, di(ethylene glycol) ethyl ether acetate, di(propylene glycol), di(propylene glycol) mono-methyl ether, tri(ethylene glycol), tri(ethylene glycol) mono-methyl ether, tri(ethylene glycol) mono-ethyl ether, tri(propylene glycol), poly(ethylene glycol) mono-methyl ether, poly(ethylene glycol) dimethyl ether, and poly(ethylene glycol)-co-(propylene glycol).

Removal of aqueous phase solution outside the copolymer containing porogen prior to treatment with the Friedel-Crafts catalyst is preferred. The aqueous phase removal steps may comprise siphon or discharge the aqueous phase solution from the reaction vessel, and add porogen or porogen miscible solvent as the solvent for the post-crosslinking. This is preferred followed by azeotropic distillation at elevated temperature until the distillate is clear.

Typical crosslinking steps include adding the Friedel-Crafts catalyst to the mixture of copolymer and solvent of porogen with the copolymer / Friedel-Crafts catalyst weight ratio of 20:1-20:3, to form a copolymer-solvent-Friedel-Crafts catalyst mixture; and maintaining temperature of the mixture in conditions known in the art.

The conditions preferred for the Friedel-Crafts post-crosslinking include elevating temperature, from about 25°C, preferably from 30°C, to about 5-40°C lower to the boiling point of the solvent of porogen at atmospheric pressure. Time for post-crosslinking reaction is dependent on the temperature selected, and shorter time is preferably used with higher temperature. In general the time is at least about 1 hour, preferably from 4 hours to 16 hours.

Post-treatment of the post-crosslinked copolymer may include adding acidic aqueous solution to the mixture of copolymer-solvent-catalyst, elevating temperature to remove the solvent of porogen by azeotropic distillation, washing the copolymer with a water miscible organic solvent and water to remove the catalyst and finally collecting of the isolated adsorbent bead.

In particular, copolymerization and post-crosslinking conditions have an effect on the surface area and pore volume of polymer bead, where the copolymerization conditions include, for example the molar ratio of styrene to ethylvinylbenzene, the amount of divinylbenzene as a crosslinking monomer, the degree of crosslinking, and the presence and type of porogen, and the post-crosslinking conditions include the amount of catalyst, reaction time, and the type of solvent.

### Examples

The following examples are intended to illustrate the invention and not to limit it except as it is limited in the claims. All ratios, parts and percentages are by weight unless otherwise stated, and all reagents used are of good commercial quality unless otherwise specified. The abbreviations have the following meanings:
DVB-divinylbenzene
EVB-ethylvinylbenzene
EDC-ethylene dichloride
TBP-tert-butyl peroxy-2-ethylhexanoate

BET specific surface area, BET porosity of the post-crosslinked polymeric adsorbents of the present invention are tested and analyzed by using the Micromeritics TriStar 3000 instrument. The percentage error of BET specific surface area is ±5%. The percentage error of BET average pore diameter is ±1%. BJH adsorption pore volume and HK micropore volume are tested and analyzed by using Quantachrome Nova Instrument.

IR and Raman spectra were used to determine the content of pendent vinyl groups, as described in K. L. Hubbard, et al., Reactive and Functional Polymers, Elsevier Science Publishers, vol.36, pp17-30(1998).

### Example 1

To a 2 liter, 4-necked flask fitted with mechanical stirrer, reflux condenser, thermometer, nitrogen inlet, heating mantel, and thermowatch assembly was charged a premixed aqueous phase consisting of 820 g deionized water, 0.82 g dispersant, 2.5 g boric acid, and 0.74 g sodium hydroxide. The stirring rate was preset at 124 rpm and a slow nitrogen flow started. With agitator off, a premixed organic phase of 200 g 55%DVB/45%EVB, 500 g EDC, and 2.0g TBP was added. Agitation was started, and the mixture was heated to 60-80°C and held at the temperature for 15 hours.

The reaction mixture was then cooled to 50°C. The aqueous phase was siphoned away from the copolymer-EDC mixture. 800 g EDC was added, and the copolymer-EDC mixture was further heated to remove water outside the copolymer through azeotropic distillation while maintain a fluid dispersion by the addition of EDC.

On cooling, 30.0 g anhydrous ferric chloride was added, the copolymer-EDC-ferric chloride mixture was heated to 60-80°C with agitation and held at the temperature for 8 hours.

The copolymer-EDC-ferric chloride mixture was then cooled to 50°C. 300 g 5% HCl aqueous solution was added, and then heated to remove EDC from the mixture through azeotropic distillation while maintain a fluid dispersion by the addition of 5%HCl aqueous solution.

On cooling, the liquid phase was siphoned away, and the copolymer was washed by methanol and water. The post-crosslinked copolymer was recovered as amber, translucent beads. Upon characterization of the pore structure of the copolymer, it has the following properties: no pendant vinyl groups detected, BET porosity of 1.62 mL/g, BET surface area of 880 m²/g, BET average pore diameter 7.36 nm, BJH adsorption pore volume of 1.62 mL/g, BJH adsorption micropore volume of 0.265 mL/g (16.4% of the total BJH adsorption pore volume), and HK micropore volume of 0.316 mL/g (19.5% of the total BJH adsorption pore volume).

Examples 2-9 are in a fashion similar to that described in Example 1. Various premixed organic phases were employed.

### Example 2

Premix organic phase of 188 g 55%DVB/45%EVB, 519 g EDC, and 2.0g TBP, no pendant vinyl groups detected, BET porosity of 1.66 mL/g, BET surface area of 830 m²/g, BET average pore diameter 8.00 nm, BJH adsorption pore volume of 1.71 mL/g, BJH adsorption micropore volume of 0.283 mL/g (16.5% of the total BJH adsorption pore volume), and HK micropore volume of 0.323 mL/g (18.9% of the total BJH adsorption pore volume).

### Example 3

Premixed organic phase of 187 g 63%DVB/37%EVB, 518 g EDC, and 2.0g TBP, 0.1 mmol/g pendant vinyl groups, BET porosity of 2.10 mL/g, BET surface area of 1062 m²/g, BET average pore diameter 7.91 nm, BJH adsorption pore volume of 2.28 mL/g, BJH adsorption micropore volume of 0.360 mL/g (15.8% of the total BJH adsorption pore volume), and HK micropore volume of 0.453 mL/g (19.9% of the total BJH adsorption pore volume).

### Example 4

Premixed organic phase of 225 g 55%DVB/45%EVB, 463 g EDC, and 2.4g TBP, no pendant vinyl groups detected, BET porosity of 1.39 mL/g, BET surface area of 841 m²/g, BET average pore diameter 6.61 nm, BJH adsorption pore volume of 1.40 mL/g, BJH adsorption micropore volume of 0.271 mL/g (19.4% of the total BJH adsorption pore volume), and HK micropore volume of 0.311 mL/g (22.2% of the total BJH adsorption pore volume).

### Example 5

Premixed organic phase of 237 g 55%DVB/45%EVB, 443 g EDC, and 2.4g TBP, no pendant vinyl groups detected, BET porosity of 1.26 mL/g, BET surface area of 840 m²/g, BET average pore diameter 6.00 nm, BJH adsorption pore volume of 1.28 mL/g, BJH adsorption micropore volume of 0.255 mL/g (19.9% of the total BJH adsorption pore volume), and HK micropore volume of 0.301 mL/g (23.6% of the total BJH adsorption pore volume).

### Example 6

Premix organic phase of 164 g 63%DVB/37%EVB, 24 g styrene, 519 g EDC, and 2.0g TBP, no pendant vinyl groups detected, BET porosity of 1.65 mL/g, BET surface area of 838 m²/g, BET average pore diameter 7.88 nm, BJH adsorption pore volume of 1.70 mL/g, BJH adsorption micropore volume of 0.281 mL/g (16.5% of the total BJH adsorption pore volume), and HK micropore volume of 0.321 mL/g (18.9% of the total BJH adsorption pore volume).

### Example 7

Premix organic phase of 188 g 47%DVB/53%EVB, 519 g EDC, and 2.0g TBP, no pendant vinyl groups detected, BET porosity of 1.25 mL/g, BET surface area of 721 m²/g, BET average pore diameter 6.94 nm, BJH adsorption pore volume of 1.41 mL/g, BJH adsorption micropore volume of 0.208 mL/g (14.8% of the total BJH adsorption pore volume), and HK micropore volume of 0.253 mL/g (17.9% of the total BJH adsorption pore volume).

### Example 8

Premixed organic phase of 187 g 80%DVB/20%EVB, 518 g EDC, and 2.0g TBP, 0.2 mmol/g pendant vinyl groups, BET porosity of 2.98 mL/g, BET surface area of 1462 m²/g, BET average pore diameter 8.15 nm, BJH adsorption pore volume of 3.08 mL/g, BJH adsorption micropore volume of 0.475 mL/g (15.4% of the total BJH adsorption pore volume), and HK micropore volume of 0.583 mL/g (18.9% of the total BJH adsorption pore volume).

### Example 9

Premixed organic phase of 175 g 80%DVB/20%EVB, 537 g EDC, and 2.0g TBP, 0.2 mmol/g pendant vinyl groups, BET porosity of 3.50 mL/g, BET surface area of 1195 m²/g, BET average pore diameter 11.7 nm, BJH adsorption pore volume of 3.68 mL/g, BJH adsorption micropore volume of 0.480 mL/g (13.0% of the total BJH adsorption pore volume), and HK micropore volume of 0.588 mL/g (16.0% of the total BJH adsorption pore volume).

## Claims

1. A post-crosslinked adsorbent comprising:
monomer units of (a) at least 47wt% at least one polyvinylaromatic monomer and (b) up to 53wt% at least one monovinylaromatic monomer; and
from 0 to 0.2 mmol/g pendent vinyl groups;
wherein the dry adsorbent has BET specific surface area in the range of about 700-1500 m²/g, BET average pore diameter 6.0-11.8 nm, BET porosity 1.2-3.5 mL/g, BJH adsorption micropore volume was less than 20% of total BJH adsorption pore volume, and HK micropore volume was less than 24% of total BJH adsorption pore volume.

2. The adsorbent according to claim 1, wherein the adsorbent is prepared by the method comprising steps of:
(i) suspension copolymerizing monomers comprising at least one polyvinylaromatic monomer and at least one monovinylaromatic monomer in the presence of copolymerization porogen;
(ii) post-crosslinking the copolymer with the crosslink post-porogen as cosolvent in the presence of Friedel-Crafts catalyst; and
(iii) isolating the post-crosslinked adsorbent.

3. A method for preparing a polymeric adsorbent comprises the steps of:
(i) suspension copolymerizing monomers comprising at least one polyvinylaromatic monomer and at least one monovinylaromatic monomer in the presence of copolymerization porogen;
(ii) post-crosslinking the copolymer with the post-crosslink porogen as cosolvent in the presence of Friedel-Crafts catalyst; and
(iii) isolating the post-crosslinked adsorbent.

4. The method according to claim 3, wherein the polyvinylaromatic monomer is mixture of meta- and para-divinylbenzene.

5. The method according to claim 4, wherein the monovinylaromatic monomer is selected from the mixture of meta- and para-ethylvinylbenzene and the mixture of styrene, meta- and para-ethylvinylbenzen.

6. The method according to claim 3, wherein the copolymerized monomers comprise, in percentage by weight based on the dry weight of the copolymer, (a) at least 47% at least one polyvinylaromatic monomer and (b) up to 53% at least one monovinylaromatic monomer.

7. The method according to claim 6, wherein the copolymerized monomers comprise, in percentage by weight based on the dry weight of the copolymer, (a) from 55% to 80% at least one polyvinylaromatic monomer and (b) from 20% to 45% at least one monovinylaromatic monomer.

8. The method according to claim 3, wherein the Friedel-Crafts catalyst is selected from metal halides.

9. The method according to claim 8, wherein the Friedel-Crafts catalyst is ferric chloride.

10. The method according to claim 3, wherein the copolymerization porogen is selected from the group consisting of methylene dichloride, ethylene dichloride, propylene dichloride, chlorobenzene and chlorotoluene.
